# EUROPÄISCHE PATENTANMELDUNG

(11) **EP 1 760 509 A2**
(43) Veröffentlichungstag der Anmeldung: **07.03.2007**
(21) Anmeldenummer: 06117884.4
(22) Anmeldetag: 26.07.2006
(51) Int. Cl.: G02B 7/02

(54) **Verfahren zur Justage eines abbildenden Elements sowie Messgerät justiert nach einem derartigen Verfahren**

(30) Priorität: 05.09.2005 DE 102005041998
(71) Anmelder: ROBERT BOSCH GMBH, 70442 Stuttgart (DE)
(72) Erfinder: Skultety-Betz, Uwe, 70771, Leinfelden-Echterdingen (DE); Haase, Bjoern, 70182, Stuttgart (DE); Stierle, Joerg, 71111, Waldenbuch (DE); Wolf, Peter, 70771, Leinfelden-Echterdingen (DE); Renz, Kai, 70771, Leinfelden-Echterdingen (DE)

(57) **Zusammenfassung**

Die Erfindung betrifft ein Verfahren zur Justage eines abbildenden Elements (64) relativ zu einem empfangende Element (26), insbesondere ein Verfahren zur Justage einer Abbildungsoptik relativ zu einem elektro-optischen Empfänger.

Es wird vorgeschlagen, dass das empfangende Element (26) in etwa in den Brennpunkt des abbildenden Elements (64) gebracht wird, das abbildende Element (64) dann lateral zu einer ersten optischen Achse (29) justiert wird und anschließend das abbildende Element (64) in dieser Position fixiert wird.

Des Weiteren betrifft die Erfindung ein Messgerät (10), insbesondere ein handgehaltenes Laserentfemungsmessgerät, welches nach dem erfindungsgemäßen Verfahren justiert ist.

## Beschreibung

Die Erfmdung betrifft ein Verfahren zur Justage eines ersten, ein Messsignal abbildenden Elements relativ zu einem zweiten, das Messsignal empfangenden Element, sowie ein nach einem solchen Verfahren justiertes Messgerät.

### Stand der Technik

Elektro-optische Messgeräte mit einer abbildenden bzw. fokussierenden Optik müssen präzise einjustiert sein, damit ein auszuwertendes Messsignal in ausreichender Qualität einem Empfänger des Geräts zugeleitet werden kann. Es sind bereits eine Mehrzahl von Verfahren zur Justage abbildender Elemente auf ein zugeordnetes Empfangselement bekannt.

Aus der DE 10314772 A1 ist eine Vorrichtung zum Justieren eines optischen Spiegels in einem optischen Messgerät bekannt, die einen einen Spiegel aufnehmenden, an einem Trägerprofil gehaltenen Spiegelträger und drei durch im Spiegelträger in Umfangsrichtung zueinander versetzt angeordneten Gewindebohrungen hindurch tretende Justierstifte aufweist. Die Justierstifte, die durch Verschrauben in den Gewindebohrungen axial verstellbar sind, stützen sich mit ihren Fußpunkten an am Trägerprofil ausgebildeten Widerlagern ab. Zum Zwecke einer exakten Schnelljustierung des Spiegels sind die Widerlager so ausgebildet, dass sie einerseits den Spiegelträger über die Justierstifte zentrieren und andererseits mindestens zwei Widerlager ein radiales Auswandern des Fußpunktes des jeweiligen Justierstifts zulassen.

### Vorteile der Erfindung

Das erfindungsgemäße Verfahren zur Justage eines Messgerätes, insbesondere eines Distanzmessgerätes mit den Merkmalen des Anspruchs 1 hat den Vorteil, dass es die schnelle und genaue Justage eines optischen Systems ohne zusätzliche Bauteile ermöglicht.

Bei der erfindungsgemäßen Verfahren zur Justage eines ersten, ein Messsignal abbildenden Elements relativ zu einem zweiten, das Messsignal empfangenden Element wird das empfangende Element in etwa in den Brennpunkt des abbildenden Elements gebracht.

Anschließend wird das abbildende Element lateral zu einer ersten optischen Achse justiert und abschließend in der einjustierten Stellung fixiert.

Zusätzliche Bauteile, wie beispielsweise Umlenkspiegel, sind bei dieser einfachen, Drei-Achsen-Justage nicht erforderlich, so dass sich ein kompaktes und preiswertes optisches Messgerät realisieren lässt, welches trotz seiner kompakten Bauweise die erforderliche genaue Justage seiner elektro-optischen Komponenten gewährleistet.

Durch die in den abhängigen Ansprüchen aufgeführten Merkmale sind vorteilhafte Weiterbildungen des erfindungsgemäßen Verfahrens möglich.

In vorteilhafter Weise wird das empfangende Element, beispielsweise ein elektro-optischer Empfänger zuerst auf einem Trägerelement, beispielsweise einer elektrischen Leiterplatte, fixiert. Anschließend wird das empfangende Element, beispielsweise ein elektro-optischer Empfänger, wie eine Photodiode, durch Verschieben des Trägerelements in den Brennpunkt des abbildenden Elements, beispielsweise einer Abbildungsoptik, gebracht.

Bei einem derartigen Verfahren kann das empfangende Element, beispielsweise eine Photodiode vor der Montage und Justierung eines entsprechenden Messgeräts bereits auf eine elektrischen Leiterplatte fixiert werden, sodass lediglich noch die elektrische Leiterplatte in ihrer Position verschoben und einjustiert werden muss. Dies ermöglicht eine hohe Prozesssicherheit, da zuerst das empfangende Element, beispielsweise eine Photodiode fixiert werden kann und anschließend nur noch die deutlich größere elektrische Leiterplatte verschoben werden muss.

In besonders vorteilhafter Weise kann das Trägerelement, insbesondere eine elektrische Leiterplatte vor dem Verschieben, d. h. vor dem Justageprozess komplett mit elektronischen Komponenten bestückt werden und zudem auch bereits überprüft werden. Dies ermöglicht einen einfachen und schnellen Herstellungsprozess für ein entsprechendes Messgerät, da die Leiterplatte außerhalb des Gehäuses des Geräts bestückt und überprüft werden kann und lediglich anschließend als Ganzes in ihrer Position einjustiert wird. Eine Justage von elektronischen oder elekto-optischen Komponenten relativ zur Leiterplatte ist mit dem erfindungsgemäßen Verfahren nicht mehr notwendig.

Das Trägerelement, insbesondere eine elektrische Leiterplatte, wird bei dem Justierungsprozess in vorteilhafter Weise nur entlang einer Achse verschoben. Dazu wird das Trägerelement beim Verschieben von zumindest einem Führungselement geführt. Dieses Führungselement kann beispielsweise im Gehäuse eines Messgeräts bzw. an einem Optikträger eines solchen Messgeräts ausgebildet sein. Die Leiterplatte mit dem darauf fixierten, empfangenden Element, wie beispielsweise einer Photodiode, wird dann in das Gehäuse eines Messgeräts bzw. in den Optikträger eines derartigen Messgeräts eingeschoben. Dabei wird die Leiterplatte beispielsweise mit Hilfe von Führungselementen über Langlöcher geführt und kann an entsprechender Stelle fixiert werden, sodass das empfangende Element in gewünschter weise beispielsweise in etwa im Brennpunkt des abbildenden Elements zu liegen kommt. Um eine gewünschte Intensität des Messsignal auf der aktiven Fläche eines empfangenden Elementes zu erreichen, sollte das Empfangende Element möglichst im Brennpunkt des abbildenden Systems angeordnnet sein. Dies klässt sich jedoch aufgrund der mechanischen Manipulierungsmöglichkeiten der Komponenten nur in Bereich gewisser Toleranzen durchführen, so dass das empfangende Element nur in etwa in den Brennpunkt des abbildenden Systems gebracht werden kann.

Um die Justage in drei Achsen abzuschließen, wird das abbildende Element, beispielsweise eine Abbildungsoptik, wie eine Empfangslinse, in zwei Achsen lateral zur optischen Achse des empfangenden systems justiert, bis die durch das abbildende Element defmierte optische Achse in einer gewissen Entfernung zentrische auf eine zweite optische Achse blickt. So wird erreicht, dass beispielsweise die Empfangsachse des empfangenden Elements zentrisch auf eine Sendeachse eines bi-axialen Messgeräts ausgerichtet ist. Auf diese Weise wird gewährleistet, dass ein entlang der Sendeachse des biaxialen Messgerätes ausgesendetes Messsignal nach einer Reflektion an einem Gegenstand über die Empfangsachse rücklaufen kann und von dem abbildenden Element, beispielsweise einer Abbildungsoptik in Form einer Linse, auf das empfangende Element, beispielsweise eine Photodiode, abgebildet d.h. gebündelt wird.

In vorteilhafter Weise wird dazu das abbildende Element, beispielsweise eine Linse, zuerst in einen Optikträger lose eingesetzt, sodass das abbildende Element in lateraler Richtung zu einer Empfangsachse einjustiert werden kann. Die Position des abbildenden Elements in dem Optikträger definiert zudem die Lage des Brennpunkts des abbildenden Elements. Nachdem das abbildende Element und das empfangende Element in drei Achsen aufeinander eingestellt sind, wird das abbildende Element in einem Optikträger fixiert, beispielsweise verklebt oder verschweißt.

Das erfindungsgemäße Verfahren zur Justage eines abbildenden Elements relativ zu einem empfangenden Element ermöglicht ein Messgerät, insbesondere ein Distanzmessgerät, mit sehr kompakten Maßen, welches jedoch die erforderliche Messgenauigkeit aufgrund einer exakten Justage seiner elektro-optischen Komponenten zueinander gewährleistet. Auf diese Weise ist ein optischer Entfernungsmesser, insbesondere ein handgehaltener Laserentfernungsmesser als kompaktes und preiswertes Messgerät möglich.

Weitere Vorteile des erfindungsgemäßen Verfahrens bzw. eines nach diesem Verfahren justierten Messgeräts ergeben sich aus der nachfolgenden Beschreibung eines Ausführungsbeispiels.

### Zeichnung

In der Zeichnung ist ein Ausführungsbeispiel eines nach dem erfindungsgemäßen Verfahren justierten Messgeräts dargestellt, welches in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen.

Es zeigen:
- Figur 1: ein elektro-optisches Entfernungsmessgerät in einer perspektivischen Übersichtsdarstellung,
- Figur 2: einen Optikträger des Messgerät gemäß Figur 1 in einer perspektivischen Darstellung seiner Unterseite,
- Figur 3: eine Aufsicht auf die Unterseite des Optikträgers gemäß Figur 2 mit eimgersetzter und justierter Leiterplatte zur Verdeutlichung des Justagevorgangs des empfangenden Systems,
- Figur 4: eine Frontansicht des Optikträgers gemäß Figur 2 zur Verdeutlichung des Justagevorgangs des abbildenden Systems.

### Beschreibung des Ausführungsbeispiels

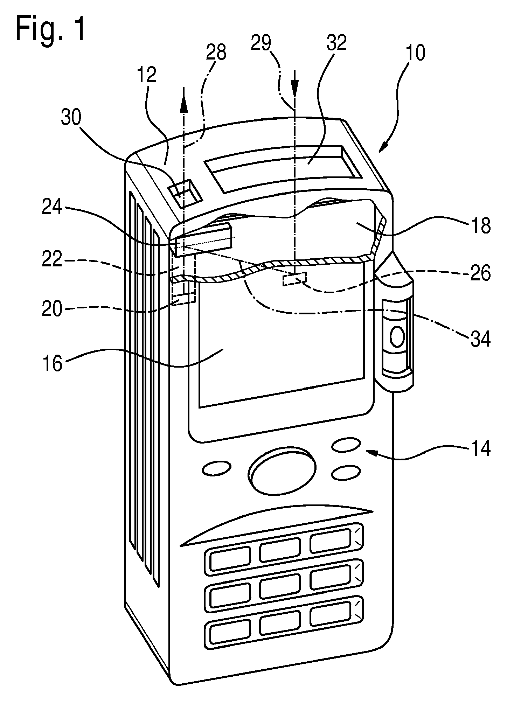

Figur 1 zeigt ein als Entfernungsmessgerät 10 ausgeführtes elektro-optisches Messgerät. Dieses weist ein Gehäuse 12, Betätigungselemente 14 zum Ein- bzw. Ausschalten des Entfernungsmessgeräts 10 sowie zum Starten bzw. Konfigurieren eines Messvorgangs auf. Neben den Bedienelementen 14 besitzt das Messgerät 10 eine Ausgabeeinheit 16 in Form eines Displays zur Wiedergabe von Messergebnissen sowie zur Darstellung von Angaben betreffend den Gerätestatus. Auf einem elektronischem Trägerelement, beispielsweise einer Leiterplatte 18, innerhalb des Gehäuses 12 des Messgeräts 10 sind eine als Laserdiode ausgeführte Sendeeinheit 20 zur Erzeugung eines optischen Sendemesssignals sowie elektronische Komponenten einer Auswerteeinheit angeordnet. Das elektronische Trägerelement 18 ist über Befestigungsmittel, beispielsweise Schrauben an einem Optikträger befestigt. Der Optikträger weist zudem einen Lichtkanal 22, eine Umlenkeinheit 24 sowie eine Empfangsoptik zur Bündelung von Messsignalanteilen auf ein Empfangs-element hin, auf. Die Sendeeinheit 20, der Lichtkanal 22, die Umlenkeinheit 24 für einen Referenzpfad 34 sowie ein Empfangseinheit 26 sind in Figur 1 lediglich schematisch angedeutet.

Zur Messung eines Abstands des Entfernungsmessgeräts 10 zu einem entfernten Gegenstand wird im Betrieb des Messgeräts eine Sendemesssignal von der Sendeeinheit 20 entlang eines Sendepfads 28 ausgesendet. Die Sendemessstrahlung verlässt das Messgerät über ein Fenster 30 im Gehäuse 12 des Gerätes 10. Das von der Oberfläche eines entfernten, zu vermessenden Gegenstands reflektierte, bzw. gestreute Messsignal gelangt über den Empfangspfad 29 wieder zum Messgerät 10 zurück und wird über ein Fenster 32 zum Teil in das Gehäuse eingekoppelt. Mittels einer in Figur 1 nicht dargestellten Empfangsoptik wird das Empfangsmesssignal gebündelt, bzw. fokussiert und von einem Empfangselement 26, beispielsweise einer Photodiode, insbesondere einer APD, detektiert. In alternativen Ausführungsformen eines derartigen Messgeräts können das Eintrittsfenster in das Messgerät und die Empfangsoptik auch einstückig ausgebildet sein.

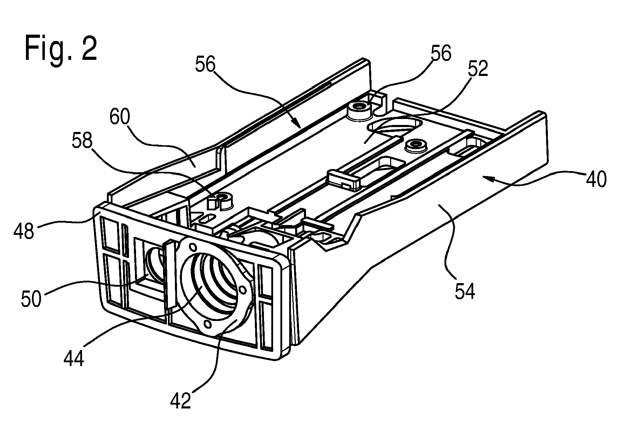

Figur 2 zeigt eine perspektivische Ansicht eines Optikträgers 40 eines erfindungsgemäßen elektro-optischen Messgeräts 10 in einer Ansicht der Unterseite, entgegen der Messrichtung 28 des Messgeräts. Der Optikträger 40 weist eine Reihe von Aufnahmen und Befestigungsmittel für optische und / oder elektronische Komponenten des Messgeräts auf. So besitzt der Optik-träger 40, der im Ausführungsbeispiel der Figur 2 aus Kunststoff gefertigt ist, in seinem Frontbereich 48 eine Aufnahme 42 für ein abbildendes Element, wie beispielsweise die Empfangsoptik des Systems, die das rücklaufende Empfangsmesssignal auf einen entsprechenden Empfänger bündelt, bzw. abbildet, was im Rahmen dieser Anmeldung als gleichbedeutend angesehen wird. Einstückig mit dem Optikträger 40 ist ein Tubus 44 ausgebildet, der das Empfangsmesssignal gegenüber dem Gehäuseinnenraum des Messgeräts 10 abschottet. Am Ende des Tubus 44 ist eine Aufnahme 46 für einen optischen Filter vorgesehen, der beispielsweise die optischen Messfrequenzen transmittieren lässt, Umgebungs- und Streulicht jedoch blockiert.

Des Weiteren weist der Optikträger 40 in seinem Frontbereicht 48 eine Aufnahme 50 für ein Austrittsfenster 30 des Sendemessstrahls auf.

Der Optikträger 40, der im Wesentlichen plattenförmig ausgebildet ist, weist an seinen beiden gegenüber liegenden Längstseiten, gegenüber der Plattenebene 52 des Trägers vertikal überstehende Versteifungsrippen 54 auf. An und zwischen diesen Versteifungsrippen 54 sind Führungselemente 56 zur Justierung und Befestigung eines elektronischen Trägerelements 18, insbesondere einer Leiterplatte, vorgesehen.

Neben der Aufnahme und Führung für das elektronische Trägerelement 18 weist der Optikträger 40 zudem eine Aufnahme 60 für ein Display 16 des Messgeräts auf.

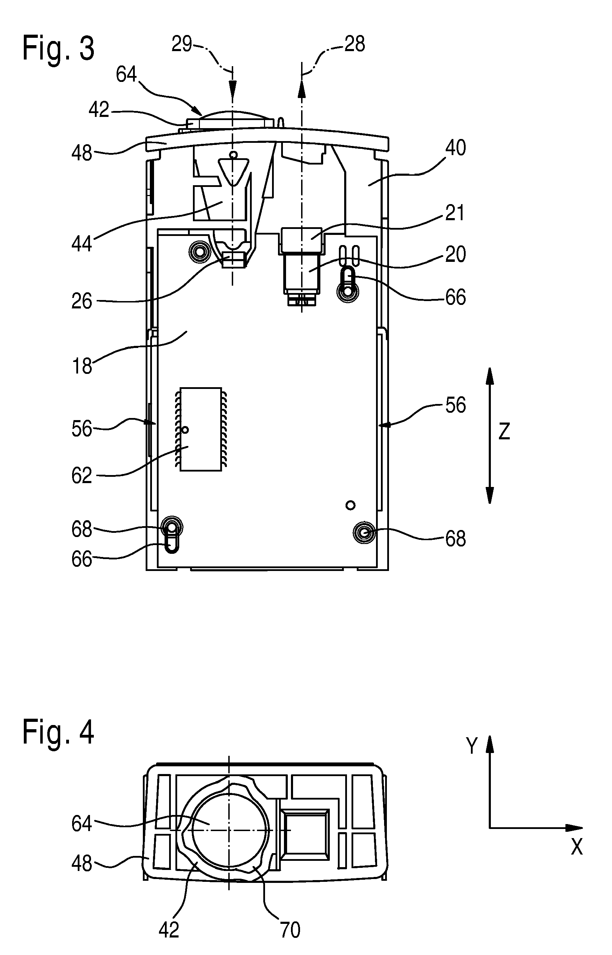

Figur 3 zeigt eine Aufsicht auf dies Unterseite eines Optikträger 40 mit bereits eingesetzter Leiterplatte 18.

Die Leiterplatte 18 ist dabei vor der Montage bereits komplett mit elektronischen und elektro-optischen Komponenten bestückt sowie geprüft worden. Insbesondere ist die Sendeeinheit 20 in Form einer Laserdiode sowie eine Kollimationsoptik 21 an der Leiterplatte fixiert worden. Darüber hinaus ist auch das empfangende Element, eine Photodiode 26, die insbesondere als SMD-Side APD ausgebildet ist, auf der Leiterplatte 18 fixiert worden. Die weiteren elektronischen Komponenten sind der Übersicht halber nicht dargestellt und lediglich in Form eines einzelnen elektronischen Bauelements 62 schematisch angedeutet. Die elektromischen Komponenten lassen sich in vorteilhafter Weise auf der der Zeichnungsebene der Figur 3 angewandten Seite der Leiterplatte 18 anordnen, da sie dann geschützt zwischen Optikträger 40 und Leiterplatte 18 angeordnet sind.

Bei der erfindungsgemäßen Justage des optischen Systems des Messgerätes wird das abbildende Element, welches im Ausführungsbeispiel gemäß Figur 3 durch die Empfangslinse 64 gebildet wird, in die Aufnahme 42 des Optikträgers eingesetzt. Anschließend wird die als Trägerelement dienende Leiterplatte 18 in Z-Richtung mit Hilfe der am Optikträger 40 ausgebildeten Führungselemente 56 verschoben, bis der Empfänger 26 in etwa im Brennpunkt der Empfangslinse 64 zu liegen kommt. Durch die Führungselemente 56, welche am Optikträger 40 ausgebildet sind, ist es möglich, das Empfangselement 26 entlang des Pfades 29, welcher der optischen Achse des Systems aus Abbildungsoptik 64 und Empfänger 26 entspricht, zu verschieben.

Das Trägerelement 18 besitzt Langlöcher 66, sodass der Träger relativ zu den Befestigungselementen 58 bzw. 66 verschoben werden kann. Nach erfolgter Justierung des Abstands zwischen der Abbildungsoptik 64 und dem Empfänger 26 wird die Leiterplatte 18 und somit der mit ihr verbundene Empfänger 26 über Befestigungsmittel 68, beispielsweise Schrauben fest mit dem Optikträger 40 verbunden.

Anschließend wird das abbildende Element, welches im Ausführungsbeispiel durch die Empfangslinse 64 gebildet ist, in seiner Aufnahme 42 in zwei Achse (X und Y) lateral zur optischen Achse 29 justiert, wie dies in Figur 4 durch die beiden orthogonalen Achsen X und Y angedeutet ist. Dabei wird die Linse 64 so lange in ihrer Aufnahme 42 verschoben, bis die Empfangsachse 29 in einer bestimmten Entfernung vom Messgerät entfernt, zentrisch auf die Sendeachse 28 des biaxialen Systems blickt. Dazu kann die Empfangslinse 64 beispielsweise von einem Manipulator gegriffen und verstellt werden, während gleichzeitig die am Empfänger 26 detektierte Intensität eines rücklaufenden Messsignals gemessen wird. Nachdem auf diese Weise die optimale Position der Empfangslinse 64 in der Aufnahme 42 ermittelt worden ist, wird die Abbildungsoptik 64 in der Aufnahme 42 fixiert, beispielsweise verklebt oder verschweißt. Zudem können, in der Aufnahme 42 ausgebildete Ausnehmungen 70, wie sie beispielsweise in der Frontalanscht der Figur 4 zu sehen sind, abgedichtet werden, um zu verhindern, dass Licht, welches nicht auf die Linse 64 fällt, in den Tubus 44 gelangt und so zu einer unerwünschten Hintergrund- oder Streustrahlung führt.

Der Optikträger 40 mit montierter und justierter Leiterplatte 18 sowie justierter Abbildungsoptik 64 kann nunmehr in das Gehäuse 12 eines Messgeräts eingeschoben und beispielsweise in diesem verrastet werden.

Das erfindungsgemäße Verfahren ermöglicht einen einfachen Aufbau für ein elektro-optisches Messgerät, ohne die Verwendung von zusätzlicehn Umlenkspiegeln, da sowohl der Empfänger, beispielsweise eine SMD-APD, als auch der Sender (Laserdiode mit entsprechendem Kollimator) auf der Leiterplatte vormontiert werden können und darüber hinaus auch bereits vor der Montage auf ihre Funktion geprüft werden können. Dies ermöglicht ein kompaktes, insbesondere handgehaltenes elektro-optisches Messgerät, beispielsweise ein Laserentfernungsmessgerät, welches trotz seiner gerimgen Baugröße die erforderliche Genauigkeit der Justage seiner elektro-optischen Komponenten sicherstellt.

Das erfindungsgemäße Verfahren und ein nach diesem Verfahren justiertes Messgerät sind nicht auf die in den Zeichnungen dargestellten Ausführungsbeispiele beschränkt.

## Patentansprüche

1. Verfahren zur Justage eines ersten, ein Messsignal abbildenden Elementes (64) relativ zu einem zweiten, das Messsignal empfangenden Element (26), insbesondere ein Verfahren zur Justage einer Abbildungsoptik (64) relativ zu einem elektro-optischen Empfänger (26), **gekennzeichnet durch** zumindest die folgenden Schritte:
a.) das empfangende Element (26) wird in etwa in den Brennpunkt des abbildenden Elementes (62) gebracht,
b.) das abbildende Element (62) wird lateral (x,y) zu einer ersten optischen Achse (29) justiert,
c.) das abbildende Element (64) wird fixiert.

2. Verfahren nach Anspruch 1, **dadurch gekennzeichnet, dass** das empfangende Element (26) zuerst auf einem Trägerelement (18), insbesondere einer elektrischen Leiterplatte, fixiert wird und anschließend durch Verschieben des Trägerelementes (18) in den Brennpunkt des abbildenden Elementes (64) gebracht wird.

3. Verfahren nach Anspruch 2, **dadurch gekennzeichnet, dass** das Trägerelement (18), insbesondere eine elektrischen Leiterplatte, vor dem Verschieben mit elektro-optischen Komponenten (62) bestückt wird.

4. Verfahren nach Anspruch 2, **dadurch gekennzeichnet, dass** das Trägerelement (18), insbesondere eine elektrischen Leiterplatte, entlang einer Achse (z) verschoben wird.

5. Verfahren nach Anspruch , **dadurch gekennzeichnet, dass** das Trägerelement (18), beim Verschieben von zumindest einem Führungselement (56) geführt wird.

6. Verfahren nach Anspruch 1, **dadurch gekennzeichnet, dass** das abbildende Element (64) justiert wird, bis die durch das abbildende Element (64) definierte optische Achse (29) in einer gewissen Entfernung zentrisch auf eine zweite optische Achse (28) blickt.

7. Verfahren nach Anspruch 1, **dadurch gekennzeichnet, dass** das abbildende Element (6+4) zuerst in einen Optikträger (40) eingesetzt wird, und dann das empfangende Element (26) in den Brennpunkt des abbildenden Elementes (64) gebracht wird.

8. Verfahren nach Anspruch 1, **dadurch gekennzeichnet, dass** das abbildende Element (64) durch Verkleben in einem Optikträger (40) fixiert wird.

9. Messgerät, insbesondere eine Distanzmessvorrichtung (10), mit zumindest einem abbildenden Element (64) und einem empfangenden Element (26), justiert gemäß einem Verfahren nach zumindest einem der Ansprüche 1 bis 8.

10. Messgerät nach Anspruch 9, **dadurch gekennzeichnet, dass** Gerät ein optischer Entfernungsmesser, insbesondere ein handgehaltener Laserentfernungsmesser (10), ist.
